Europäisches Patentamt

European Patent Office

Office européen des brevets

(11) Publication number: **0 287 530**
**A2**

## (12) EUROPEAN PATENT APPLICATION

(21) Application number: 88830157.9

(22) Date of filing: 12.04.88

(51) Int. Cl.4: **B 65 D 85/72**
**B 65 D 77/20, B 65 D 8/00,**
**A 21 C 9/04**

(30) Priority: 13.04.87 IT 5323387

(43) Date of publication of application:
19.10.88 Bulletin 88/42

(84) Designated Contracting States:
AT BE CH DE ES FR GB GR IT LI LU NL SE

(71) Applicant: PIBER GROUP S.r.l.
Piazza Carducci, 9
I-27058 Voghera (Pavia) (IT)

(72) Inventor: Bergaglio, Pierangelo
c/o Piper Group S.r.l. Piazza Carducci, 9
I-27058 Voghera (Pavia) (IT)

(74) Representative: Saconney, Piero et al
c/o Jacobacci-Casetta & Perani S.p.A. Via Alfieri, 17
I-10121 Torino (IT)

(54) Sqeezable container for creamy products.

(57) A container for creamy products comprises a tapered tubular skirt (10) which is deformable by squeezing, with a base opening sealed by a lid (16) and an apex part (22) opposite the base opening. The apex part (22) has an end opening for the delivery of the product, sealed by a removable cap (34), and the lid (16) is constituted by a membrane of sheet material which is deformable without tearing as a result of the squeezing of the skirt (10), and is sealed to the edge (14) of the base opening so as not to become detached therefrom as a result of this squeezing.

FIG. 4

**Description**

## Squeezable container for creamy products

The present invention relates to a container for creamy products, comprising a tapered tubular skirt which is deformable by squeezing, with a base opening sealed by a lid and an apex part opposite the base opening.

The art abounds with examples of squeezable containers for the packaging and direct consumption of ice-creams or other creamy products. Examples of such containers are illustrated, inter alia, in the documents US-A-797,775, US-A-2,965,499, FR-A-1,223,345, CH-A-363,613, EP-A-0,074,936, JP-U-56-156,777, JP-U-56-156,778 and JP-U-56-156,779. In these containers, the skirt, which in most cases is conical, is made of impermeable paper, metal foil or plastics material and is permanently or resiliently deformable.

A characteristic common to all these known containers is that the product squeezed through the base opening is intended to be taken up directly by means of the lips and/or the tongue, once the lid has been removed.

The container is filled by the pouring or casting of the product through the base opening before the fitting of the lid. The latter is sometimes constituted by a disc of impermeable card fitted into the base opening or by a membrane sealed or glued to the edge of the opening. In many cases the lid has some means, such as, for example, a tongue, for its removal to allow consumption of the product, or it can be torn for the same purpose.

A characteristic common to all the containers of the prior art is that, when the skirt of the container is squeezed, the part of the product which leaves it has a section equal to that of the base opening. Particularly if the consumer of the ice-cream or the like is a child, it is inevitable that, in sucking the product, he will become soiled around his mouth, precisely because it is smaller than the section of the product squeezed.

It would therefore be desirable to provide a container from which the creamy product is discharged, as a result of squeezing, as an extrusion with a small section such that a child can suck it without soiling himself around his mouth and possibly by holding the part of the container through which the product is discharged between his lips.

The problem of the extrusion of a creamy product, such as ice-cream, in a bead with a small section has already been resolved according to the document IT-A-785 21817, which provides for the closure of the base opening by means of a plastics nozzle closed in its turn by a removable lid. According to this solution, the nozzle, being rigid, does not allow the skirt of the container to deform in the zone adjacent the base opening, whereby it is not possible to squeeze out all the product.

According to the present invention, the disadvantages of known squeezable containers are eliminated by means of a container characterised in that the apex part has an end opening for the delivery of the product, sealed by a removable cap, and the lid is constituted by a sheet membrane which is deformable without tearing as a result of the squeezing of the skirt, and is sealed to the edge of the base opening so as not to become detached therefrom as a result of this squeezing.

By virtue of this solution, a container according to the invention may be filled like an ordinary cone or the like through the base opening. The lid differs from the ordinary cones, however, in that it is sealed permanently to the edge of the base opening and, by virtue of its characteristics, deforms together with the skirt so as not to obstruct the squeezing and, due to its deformability, to allow the removal of substantially all the product, and at the same time ensures that the product is not discharged from the base opening due to tearing or detachment of the lid.

A container according to the invention lends itself, in addition to the direct consumption of the product, to use in the kitchen for decorations of whipped cream, mayonnaise, etc. In these applications, the container may be of "single-dose" type, containing a quantity of product to be used on a single occasion.

The subject of the invention will be better understood from a reading of the detailed description which follows with reference to the appended drawings, given purely by way of non-limiting example, in which:

Figure 1 is a perspective view of a container according to the invention, in the form of a cone,

Figure 2 is a partial longitudinal section taken on the line II-II of Figure 2, on an enlarged scale,

Figure 3 is a partial longitudinal section taken on the line III-III of Figure 1, on an enlarged scale,

Figure 4 is a perspective view of the container used for direct consumption by the mouth, and

Figure 5 is a perspective view of the container used as a dispenser of decorations.

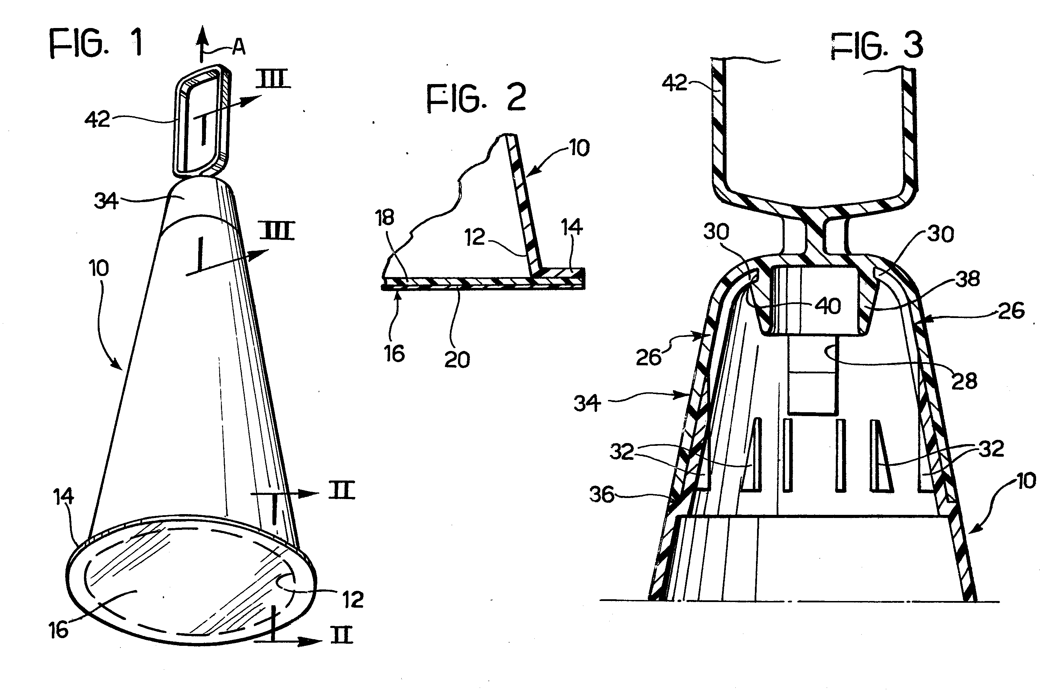

With reference to Figure 1, a container according to the invention comprises a tapered tubular skirt 10 which is preferably conical in shape, as shown. The skirt 10 has a base opening 12 defined by a radial peripheral flange 14. The opening 12 is used, in known manner, for the initial filling of the container. After the container has been filled, the base opening 12 is closed by a lid 16 sealed permanently to the flange 14.

Both the skirt 10 and the lid 16 are of deformable material. Preferably, the skirt 10 is made by thermoforming from a sheet of polyethylene and the lid 16 is a membrane obtained from a laminate which includes a layer of polyethylene 18 and a layer of aluminium foil 16. In this case, the polyethylene layer 18 is heat-sealed permanently to the flange 14.

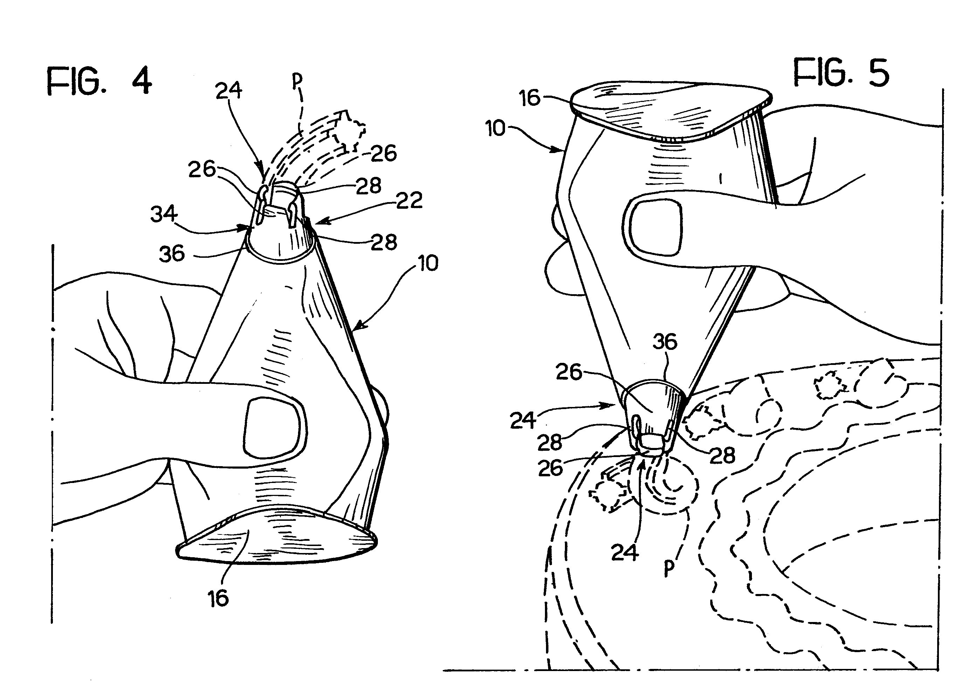

As may better be seen in Figures 4 and 5, the skirt 10 has an end opening 24 in its apex part 22 for the delivery of the product in the container. To define the delivery opening 24, the apex part 22 is divided into segments 26 by longitudinal cuts 28. The segments 26 have free edges 30 which are bent into hooks towards the centre of the opening 24. The cuts 28 are in the form of relatively wide slots for the purpose which will be clarified below. The segments 26 are adapted to bend radially relative to the opening 24 and, to afford them certain rigidity, are reinforced by internal longitudinal ribs 32.

The skirt 10 has an associated cap 34 which serves primarily to seal the supply opening 24 prior to consumption of the product. The cap 34 is preferably constituted by a piece of substantially rigid moulded plastics material, such as polyethylene or polyvinyl chloride. The body of the cap 34 is bell-shaped so that it covers the apex part 22 of the skirt completely and its free edge bears against a shoulder 36 of the skirt 10.

A boss 38 is formed in the bottom of the cap 34 and has an annular groove 40 in which the hooked ends 30 of the segments 26 are snap-engaged to retain the cap 34 firmly in the position in which it closes the opening 24.

The cap 34 has an integrally formed pull appendage 42. This appendage, as shown, is in the form of a ring.

In order to open the container for consumption, the ring appendage 42 is pulled (arrow A Figure 1) as a result of which the hooked ends 30 of the segments 26 are disengaged from the groove 40 and the cap 34 is detached.

The ring appendage 42 also serves for the carrying of the container. It has particular utility when the container contains an ice-cream product. In this case, since the container is carried by the insertion of a finger in the ring 42 and the skirt 10 is not in contact with the hand, the latter does not feel the unpleasant cold sensation due to the frozen skirt 10 and the product is not heated by the hand.

Figure 4 shows the container in use for direct consumption of the product by the mouth. As may be seen, the squeezing of the skirt 10 by hand causes the product P to be discharged from the opening 24 in the form of a small-sectioned extrusion which, as a result of the form imparted by the slot 28, has a pleasing grooved appearance.

In Figure 5, the container is shown in use for decorating a cake. In this case, the product P extruded in grooved form is, for example, whipped cream.

The use of the container illustrated for the delivery of other creamy, sweet or salad products is understood.

As can be seen from Figures 4 and 5, the deformation of the skirt 10 causes the deformation of the membrane or lid 16 which, given its nature, is not torn or detached from the skirt 10. The deformability of the membrane 16 allows almost all the product to be squeezed out of the container.

## Claims

1. A container for creamy products, comprising a tapered tubular skirt (10) which is deformable by squeezing, with a base opening (12) sealed by a lid (16) and an apex part (22) opposite the base opening (12), characterised in that the apex part (22) has an end opening (24) for the delivery of the product, sealed by a removable cap (34), and the lid (16) is constituted by a membrane of sheet material which is deformable without tearing as a result of the squeezing of the skirt (10), and is sealed to the edge (14) of the base opening (12) so as not to become detached therefrom as a result of this squeezing.

2. A container according to Claim 1, characterised in that the apex part (22) of the skirt (10) is divided into segments (26) by longitudinal cuts (28) and the segments (26) have free edges (30) which are shaped as hooks and bent towards the centre of the delivery opening (24), and in that the cap (34) is constituted by a piece of substantially rigid plastics material and has an internal end boss (38) with an annular groove (40) in which the hooked edges (30) of the segments (26) are snap-engaged in a disengageable manner.

3. A container according to Claim 2, characterised in that the segments (26) have longitudinal internal reinforcing ribs (32).

4. A container according to Claim 2 or Claim 3, characterised in that the segments (26) are separated by longitudinal cuts in the form of slots (28).

5. A container according to any one of the preceding claims, characterised in that the cap (34) has a pull appendage (42) at its top.

6. A container according to Claim 5, characterised in that the pull appendage (42) is in the form of a ring so as also to constitute a gripping member for carrying.

7. A container according to any one of the preceding claims, characterised in that the skirt (10) is of heat-sealable plastics material and the lid (16) is constituted by a laminate which includes a layer (18) of heat-sealable plastics material the periphery of which is heat-sealed to the edge (14) of the base opening (12) of the skirt (10).

8. A container according to any one of the preceding claims, characterised in that the skirt (10) is of substantially conical form.

0287530

FIG. 1

FIG. 2

FIG. 3

FIG. 4

24   P
26
26           26
              28
34           22
36           28
10

16

FIG. 5

16
10
36
26
26
24
28
28
24
P

0287530